# EUROPEAN PATENT APPLICATION

(11) **EP 3 340 631 A1**
(43) Date of publication of application: **27.06.2018**
(21) Application number: 17207361.1
(22) Date of filing: 14.12.2017
(51) Int. Cl.: H04N 19/89, G06F 3/14, H04N 1/32

(54) **IMAGE PROCESSOR AND SEMICONDUCTOR DEVICE**

(30) Priority: 26.12.2016 JP 2016251112
(71) Applicant: Renesas Electronics Corporation, Tokyo 135-0061 (JP)
(72) Inventor: KAYA, Toshiyuki, Koutou-ku, Tokyo 135-0061 (JP); MOCHIZUKI, Seiji, Koutou-ku, Tokyo 135-0061 (JP); MATSUBARA, Katsushige, Koutou-ku, Tokyo 135-0061 (JP); HASHIMOTO, Ryoji, Koutou-ku, Tokyo 135-0061 (JP); IMAOKA, Ren, Koutou-ku, Tokyo 135-0061 (JP)
(74) Representative: Glawe, Delfs, Moll

(57) **Abstract**

An object of the present invention is to detect a failure of a camera input in a system including a camera or a video transmission path (camera input). An image processor includes a hash derivation circuit having a computing unit that calculates hash values on an input screen and a storage circuit that stores the hash values. The image processor compares the hash values between multiple frames so as to decide whether the screens have changed or stopped. A failure is detected when the screens are stopped.

## Description

### CROSS-REFERENCE TO RELATED APPLICATIONS

The disclosure of Japanese Patent Application No. 2016-251112 filed on December 26, 2016 including the specification, drawings and abstract is incorporated herein by reference in its entirety.

The present disclosure relates to an image processor and is applicable to, for example, an image processor that receives an inputted camera image.

### BACKGROUND

Advanced driver assistance systems (ADASs) for vehicles have been researched and developed in which driving of drivers is supported by detecting, from images inputted from cameras, pedestrians and obstacles during traveling of vehicles. Such a technique is necessary for achieving autonomous driving.

For example, as illustrated in the system of Japanese Unexamined Patent Application Publication No. 2001-36927, in a device including a camera or a camera-image transmission path (Hereinafter, will be called a camera input) and in the system, the detection of failures of the camera input is quite an important function and is also a problem.

Other problems and new features will be clarified by a description of the present specification and the accompanying drawings.

In the present disclosure, the outline of a representative configuration is simply described as follows:
An image processor detects failures by determining hash values for a plurality of input screens or acquiring histogram data for the input screens.

The semiconductor device of the present disclosure allows the detection of failures of a camera input.

### BRIEF DESCRIPTION OF THE DRAWINGS

FIG. 1 is a block diagram showing the configuration of an ADAS system according to an embodiment;
FIG. 2 is a block diagram showing the configuration of an image processor of FIG. 1;
FIG. 3 is a schematic diagram for explaining a fixed display failure;
FIG. 4 is a block diagram showing the configuration of an image processor according to an example;
FIG. 5 is a schematic diagram for explaining a method of detecting a failure;
FIG. 6 is a flowchart showing failure determination by a program running on a CPU;
FIG. 7 is an explanatory drawing showing the relationship between an image frame and macro blocks;
FIG. 8 shows the outline of intra-screen and inter-screen predictions in video encoding;
FIG. 9 shows encoding of an I picture, a P picture, and a B picture in terms of time;
FIG. 10 is a block diagram showing the configuration of a video encoding circuit in FIG. 4;
FIG. 11 is a block diagram showing the configuration of a hash derivation circuit in FIG. 10;
FIG. 12 is an explanatory drawing showing an operation of a hash computing unit in FIG. 10;
FIG. 13 is an explanatory drawing showing the order of data processing on one screen by the hash derivation circuit in FIG. 11;
FIG. 14 is an explanatory drawing showing handling of data having a 10-bit depth per pixel;
FIG. 15 is a block diagram showing the configuration of a hash derivation circuit according to a first modification;
FIG. 16 is an explanatory drawing showing the order of processing data on one screen by the hash derivation circuit in FIG. 15;
FIG. 17A is an explanatory drawing showing a method of providing ambiguity by rounding pixel data according to a second modification;
FIG. 17B is an explanatory drawing showing a method of providing ambiguity by rounding pixel data according to the second modification;
FIG. 18 is a flowchart showing failure determination from at least three past screens;
FIG. 19 is an explanatory drawing showing an example of failure determination when past five screens include identical screens;
FIG. 20 is an explanatory drawing showing an example of failure determination when three consecutive past screens are identical to one another;
FIG. 21 is an explanatory drawing showing an example of failure determination when the same combination of screens repeatedly appears;
FIG. 22 is a block diagram showing the configuration of a hash derivation circuit according to a fourth modification;
FIG. 23 is an explanatory drawing showing an example of a screen vertically divided into n areas;
FIG. 24 is a block diagram showing the configuration of a hash derivation circuit according to a fifth modification;
FIG. 25 is a block diagram showing the configuration of a hash derivation circuit according to a sixth modification;
FIG. 26 is an explanatory drawing showing a failure that is a pixel value fixed at a location of a screen;
FIG. 27 is a conceptual diagram showing failure determination according to a pixel value histogram;
FIG. 28 is a block diagram showing the configuration of a histogram derivation circuit according to a second example;
FIG. 29 is a flowchart showing failure determination according to the pixel value histogram; and
FIG. 30 is a block diagram showing another configuration example of the video encoding circuit in FIG. 4.

### DETAILED DESCRIPTION

An embodiment and examples will be described below in accordance with the accompanying drawings. In the following explanation, the same constituent elements are indicated by the same reference numerals and the explanation thereof may not be repeated.

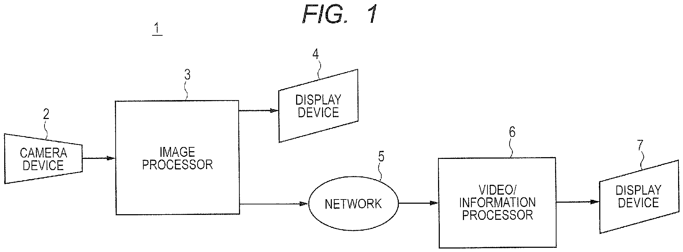

FIG. 1 is a block diagram showing the configuration of an ADAS system according to the embodiment. An ADAS system 1 includes a camera device 2, an image processor 3, a first display device 4, a network 5, a video/information processor 6, and a second display device 7. An image inputted from the camera device 2 is processed by the image processor 3 and is displayed on the first display device 4; meanwhile, a video signal is outputted to the network 5. In the video/information processor 6 subsequent to the network 5, the transmitted video signal is directly displayed on the second display device 7 or is combined with information from another sensor before being displayed on the second display device 7.

In the information processor 6 subsequent to the network 5, for example, a transmitted encoding video signal is decoded before being displayed, or the video signal is combined with information from another sensor and undergoes video processing.

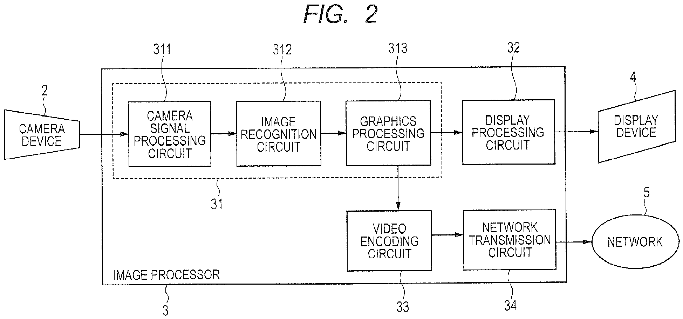

FIG. 2 is a block diagram showing the configuration of the image processor of FIG. 1. In FIG. 2, functional blocks are illustrated but a control CPU, the main storage of the CPU, and so on are omitted. The image processor 3 includes a video signal processing circuit 31, a display processing circuit 32, a video encoding circuit 33, and a network transmission circuit 34. The video signal processing circuit 31 includes a camera signal processing circuit 311, an image recognition circuit 312, and a graphics processing circuit 313. The image processor 3 has various functions, for example, the function of detecting white lines and obstacles from images outside a vehicle and displaying information on the white lines and obstacles so as to superimpose the information on images. The signal inputted from the camera device 2 is processed into a video signal in the camera signal processing circuit 311, undergoes various kinds of detection and video superimposition in the image recognition circuit 312 and the graphics processing circuit 313, and then is outputted from the display processing circuit 32 to the first display device 4. Moreover, video to be outputted is encoded to reduce the data amount of network transmission. An outputted image from the graphics processing circuit 313 is encoded and compressed in the video encoding circuit 33 and then is outputted to the network 5 by the network transmission circuit 34.

In this system, the detection of failures of a camera input is quite an important function.

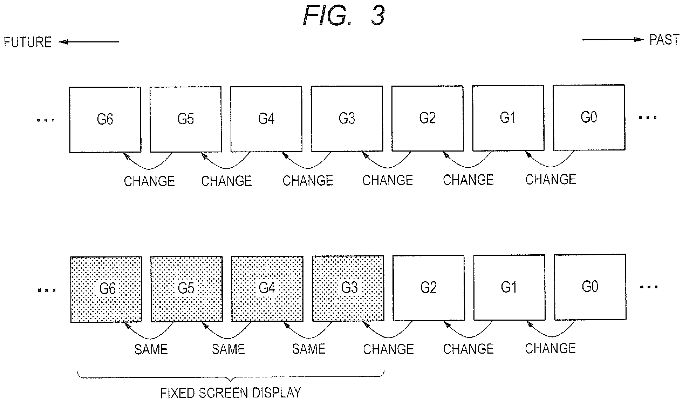

Various kinds of failures may occur at the camera input. A representative failure is fixed screen display. Specifically, any physical or system factors continuously display the same screen over several frame periods. Thus, it appears that the screen is stopped. FIG. 3 is a schematic diagram showing fixed screen display. The upper part of FIG. 3 shows a normal state, whereas the lower part of FIG. 3 shows an abnormal state (fixed screen display). In the normal state, the screen display changes in screens G0 to G6, whereas in the abnormal state, the screen display changes in screens G0 to G2 but remains the same from screens G3 to G6, resulting in fixed screen display.

The present embodiment provides a configuration and a method for detecting fixed screen display failures with a simple technique. Specifically, in the present embodiment, failures are detected by determining hash values for a plurality of input screens or acquiring histogram data for the input screens. For example, hash values are derived and stored for a plurality of screens and then are compared among multiple pictures. This can detect failures such as a stopped screen. Thus, camera failures can be detected with failure patterns other than black screen or fixed color screens . Failures are detected before camera video is processed to be displayed or encoded, allowing detection of failures occurring in the camera device and a video transmission path.

An exemplary embodiment will be described below in accordance with examples and modifications. The configurations of the examples are merely exemplary for explaining the embodiment and thus different configurations may be used.

### [Example]

In this example, a fixed display failure is detected by the video encoding circuit and the control program of the circuit in the image processor shown in FIG. 2.

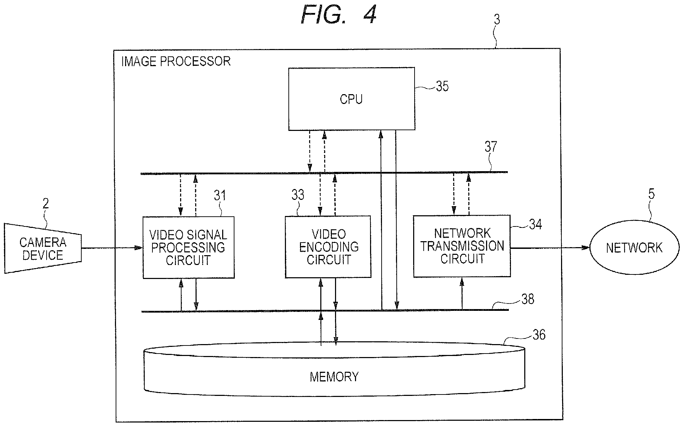

FIG. 4 is a block diagram showing the configuration of the image processor that features the video encoding circuit. The image processor 3 includes the video signal processing circuit 31, the video encoding circuit 33, the network transmission circuit 34, a CPU 35, a memory 36, a CPU bus 37, and a memory bus 38. The camera signal processing circuit 311, the image recognition circuit 312, and the graphics processing circuit 313 in FIG. 2 are combined into the video signal processing circuit 31 and the display processing circuit 32 is omitted. FIG. 4 shows the CPU 35 and the memory 36 that are omitted in FIG. 2. A signal inputted from the camera device 2 is processed in the video signal processing circuit 31, is inputted to the video encoding circuit 33, and then is encoded and compressed therein. After that, the signal is inputted to the network transmission circuit 34 and then is outputted to the network 5. Data is transferred between the circuits through the memory bus 38 and the memory 36. Programs executed by the CPU 35 are stored in the memory 36. The CPU 35 controls the circuits through the CPU bus 37. The image processor 3 is a semiconductor device including at least one semiconductor chip. For example, the video signal processing circuit 31, the display processing circuit 32, the video encoding circuit 33, the network transmission circuit 34, the CPU 35, the CPU bus 37, and the memory bus 38 are each configured with a single semiconductor chip. The memory 36 is configured with at least one semiconductor memory chip, e.g., a SDRAM chip. The image processor 3 may include a package of at least one semiconductor chip.

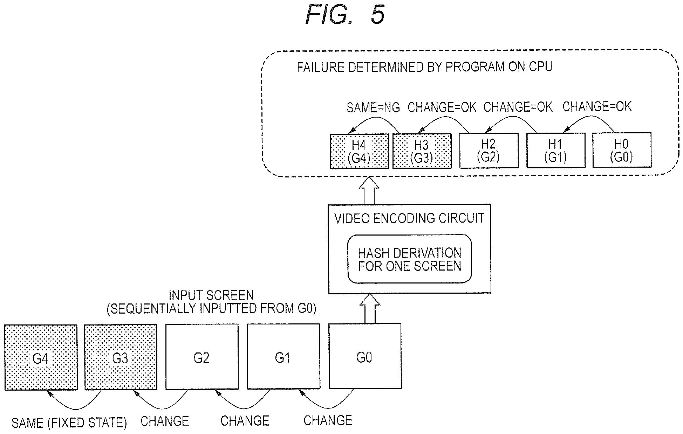

FIG. 5 shows the outline of failure detection. Fixed screen display can be detected by circuits included in the video encoding circuit 33 and the control program of the video encoding circuit 33 operating on the CPU 35. FIG. 5 shows that the screens G0 to G4 of the input screens are sequentially inputted to the video encoding circuit 33, the screens G3 and G4 being placed in a fixed state. In the video encoding circuit 33, a hash value is derived for each of the frames of the input screens. In FIG. 5, H0 to H4 indicate hash values for the screens G0 to G4. A program on the CPU 35 reads the derived hash values of the respective frames and compares the hash values of the consecutive two frames. If the hash values are different in the consecutive two frames, it is decided that the input screens have changed and are placed in a normal state. If the hash value remains the same in the consecutive two frames, it is decided that the input screens have not changed and a fixed display failure has occurred. In FIG. 5, H0 to H3 are changed but H3 and H4 remain the same where a fixed display failure is detected.

In this case, the hash values are a bit string that can be calculated depending on input data. The hash values are characterized in that the same value can be obtained from the same input data while different values can be obtained from different inputs. Generally, various hash functions are available. For example, known hash functions include Message Digest 5 (MD5) released as IETF RFC 1321 (R. Rivest, "The MD5 Message-Digest Algorithm", April 1992, Network Working Group Request for Comments: 1321, [retrieved on September 5, 2016], Internet (URL: https://tools.ietf.org/html/rfc1321)) and IETF RFC 3174 (D. Eastlake, 3rd et.al., "US Secure Hash Algorithm 1 (SHA1) ", September 2001, Network Working Group Request for Comments: 3174 Category: Informational, [retrieved on September 5, 2016], Internet (URL: https://tools.ietf.org/html/rfc3174)), and SHA-1. A hash algorithm used in the present example is not limited. Error detection codes for a cyclic redundancy check (CRC) and so on are also available.

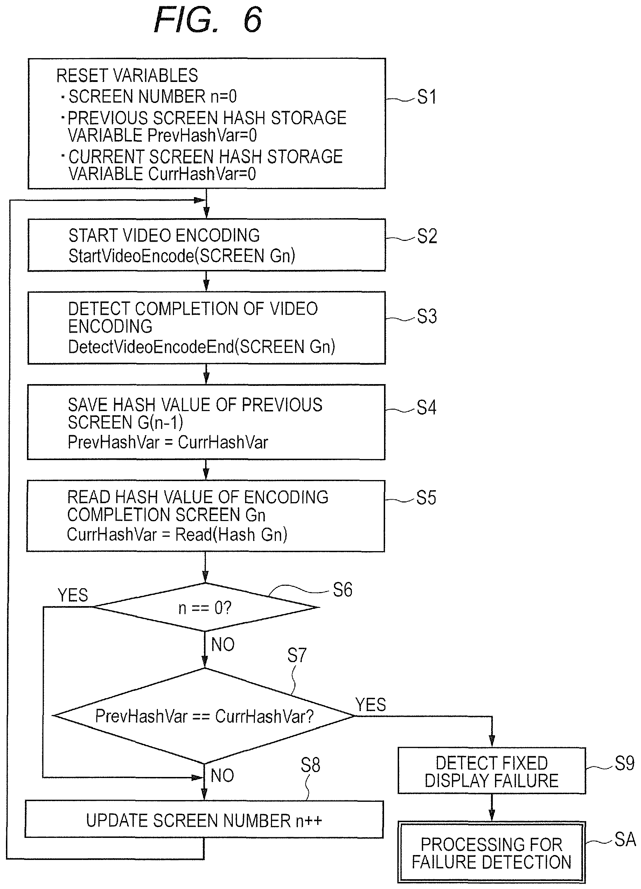

FIG. 6 is a flowchart showing failure determination by the program on the CPU. The CPU 35 acting as a failure detection circuit compares an encoded hash value on the previous screen with a hash value being encoded on the current screen. If the hash values are equal to each other, it is decided that a fixed display failure is detected, and then processing for failure detection is performed. The processing for failure detection is, for example, alarming or returning to the processing of the subsequent screen without transmitting the corresponding screen. The steps of the processing will be discussed below.
Step S1: The CPU 35 resets variables as follows:
   Screen number: n = 0
   Previous screen hash storage variable: PrevHashVar = 0
   Current screen hash storage variable: CurrHashVar = 0
Step S2: The CPU 35 provides an instruction to a control circuit 331, causing the video encoding circuit 33 to start video encoding (StartVideoEncode (screen Gn))
Step S3: The CPU 35 detects the completion of video encoding from the video encoding circuit 33 (DetectVideoEncodeEnd (screen Gn)). The control circuit 331 outputs a signal indicating the completion of video encoding, sets a flag, or outputs an interrupt request.
Step S4: The CPU 35 saves the hash value of a previous screen G(n-1) into a register in the CPU (PrevHashVar = CurrHashVar).
Step S5: The CPU 35 reads the hash value of the encoding completion screen Gn from the video encoding circuit 33 (CurrHashVar = Read(Hash Gn)). In this case, the hash value of the encoding completion screen Gn is a hash value on the input screen of the screen Gn at the completion of encoding. Step S6: The CPU 35 decides whether the current screen is the first screen or not (n==0?). In the case of NO, the process advances to step S7. In the case of YES, the process advances to step S8.
Step S7: The CPU 35 decides whether the current screen has the same hash value as the previous screen (PrevHashVar = CurrHashVar?) . In the case of NO (change), the process advances to step S8. In the case of YES (same), the process advances to step S9.
Step S8: The CPU 35 updates the screen number (n++) and then the process returns to step S2.
Step S9: The CPU 35 detects a fixed display failure.
Step SA: The CPU 35 performs the processing for failure detection.

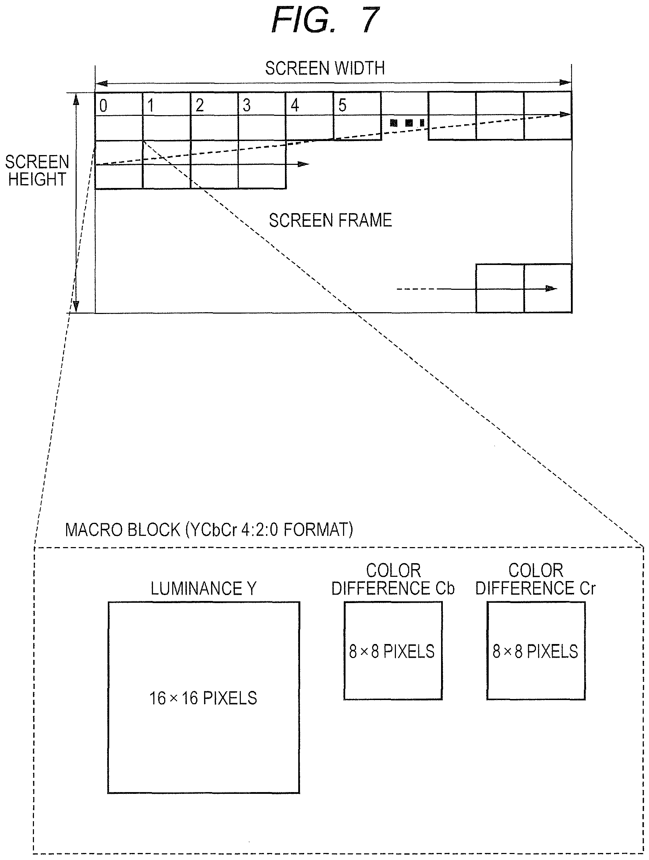

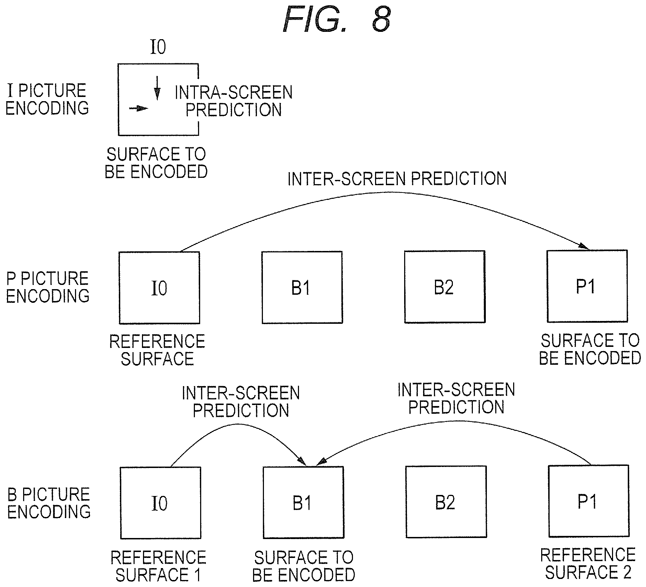

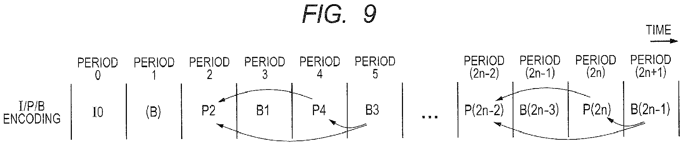

The video encoding performed in the video encoding circuit will be discussed below. FIG. 7 shows that a screen frame is divided into macro blocks. FIG. 8 shows the outline of intra-screen and inter-screen predictions in video encoding. FIG. 9 shows encoding of an I picture, a P picture, and a B picture in terms of time.

The video encoding in the video encoding circuit is video compression that is known as standards such as MPEG, H. 264, and H. 265. The present embodiment is applicable to any one of the standards. For the sake of convenience, the present example will be described based on H. 264. Basically, rectangular blocks formed by dividing a screen into a lattice pattern are sequentially processed. A unit block, which may be called in various ways depending on the standards, will be referred to as "macro block" . As shown in FIG. 7, macro blocks are processed from the upper left to the lower right of the screen in raster order. In the case of a screen in YCbCr4: 2: 0 format, a macro block includes a set of three components: a luminance Y of 16 by 16 pixels, a color difference Cb of 8 by 8 pixels, and a color difference Cr of 8 by 8 pixels.

In video encoding, techniques such as an intra-screen prediction and an inter-screen prediction are used. As shown in FIG. 8, three encoding modes are available for video encoding. In I picture encoding, an intra-screen prediction is made in which a macro block to be encoded is predicted from macro blocks at encoded positions in the same screen. In P picture encoding, an inter-screen prediction is made in which a macro block to be encoded is predicted from another encoded screen. In B picture encoding, an inter-screen prediction is made from two encoded screens. Briefly speaking, "prediction" is to retrieve and determine a screen similar to a macro block to be encoded. A difference from the predicted screen can be determined so as to increase a compression rate. Another encoded screen to be used for inter-screen prediction will be called "reference screen". An inter-screen prediction is also used for the P picture and the B picture.

As shown in FIG. 9, for P4 serving as a P picture of a period 4, a screen prediction is made from P2 serving as a P picture of a period 2 of a reference screen. For B3 serving as a B picture of a period 5, a screen prediction is made from the two reference screens of P2 and P4. Similarly, for P(2n) serving as a P picture of a period (2n), a screen prediction is made from P (2n-2) serving as a P picture of a period (2n-2) of a reference screen. For B(2n-1) serving as a B picture of a period (2n+1), a screen prediction is made from the two reference screens of P(2n-2) and P(2n).

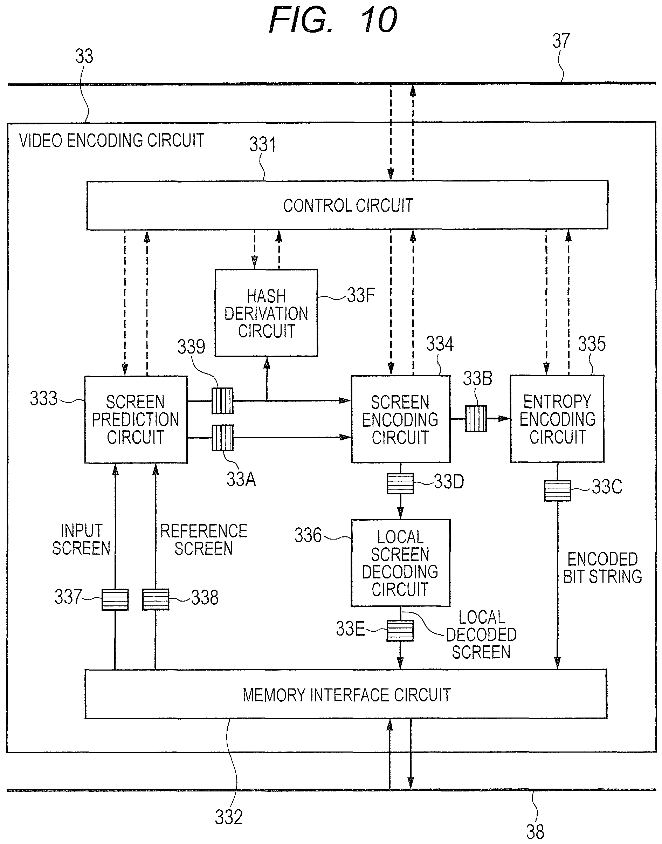

Referring to FIG. 10, the configuration of the video encoding circuit will be described below. FIG. 10 is a block diagram showing the configuration of the video encoding circuit in FIG. 4. The video encoding circuit 33 includes the control circuit 331, a memory interface circuit 332, a screen prediction circuit 333, a screen encoding circuit 334, an entropy encoding circuit 335, a local screen decoding circuit 336, and a hash derivation circuit 33F.

The control circuit 331 communicates with the CPU 35 through an interface with the CPU bus 37 and controls the circuits of the video encoding circuit 33. The memory interface circuit 332 inputs and outputs data to and from the memory 36 outside the video encoding circuit 33 through an interface with the memory bus 38. The screen prediction circuit 333 makes an intra-screen prediction or an inter-screen prediction from an input screen and a reference screen (a past local decoded screen, which will be discussed later). In the screen encoding circuit 334, for example, the calculation of a difference from a predicted screen, conversion to a frequency space, and quantization are performed to derive a coefficient string with a compressed data amount. In the entropy encoding circuit 335, the coefficient string from the screen encoding circuit 334 is encoded to generate an encoded bit string according to techniques such as variable-length coding and arithmetic coding. The encoded bit string is the output of the video encoding circuit 33 and is stored in the memory 36. In the local screen decoding circuit 336, inverse transformation from the screen encoding circuit 334 is performed to decode the screen. The decoded screen (local decoded screen) is stored in the memory 36 and is used as a reference screen for the subsequent screens. The circuits of the video encoding circuit 33 perform processing for each macro block. In this configuration, data buffers 337, 338, 339, 33A, 33B, 33C, 33D, and 33E are arranged between the circuits so as to store data of several macro blocks. The data buffers 337 and 339 store input screen pixel data, the data buffers 338 and 33A store reference screen pixel data, the data buffers 33B and 33D store intermediate data for encoding, the data buffer 33E stores local decoded screen pixel data, and the data buffer 33C stores encoded bit string data. Input image data in the data buffer 337 is stored in the data buffer 339 through the screen prediction circuit 333.

The video encoding circuit 33 includes the hash derivation circuit 33F serving as a fixation detection circuit. The hash derivation circuit 33F receives input screen data to be inputted to the screen encoding circuit 334 and derives a hash value unique to an input screen. The derived hash value can be read from the CPU 35 through the control circuit 331.

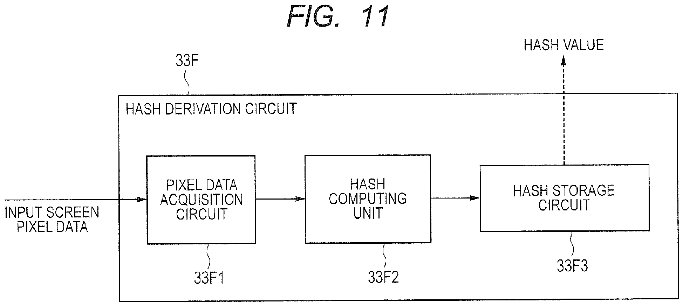

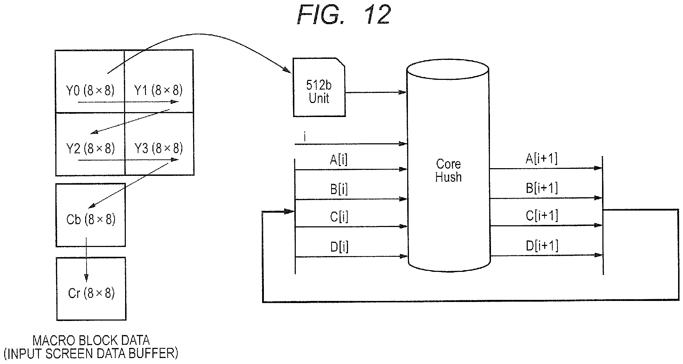

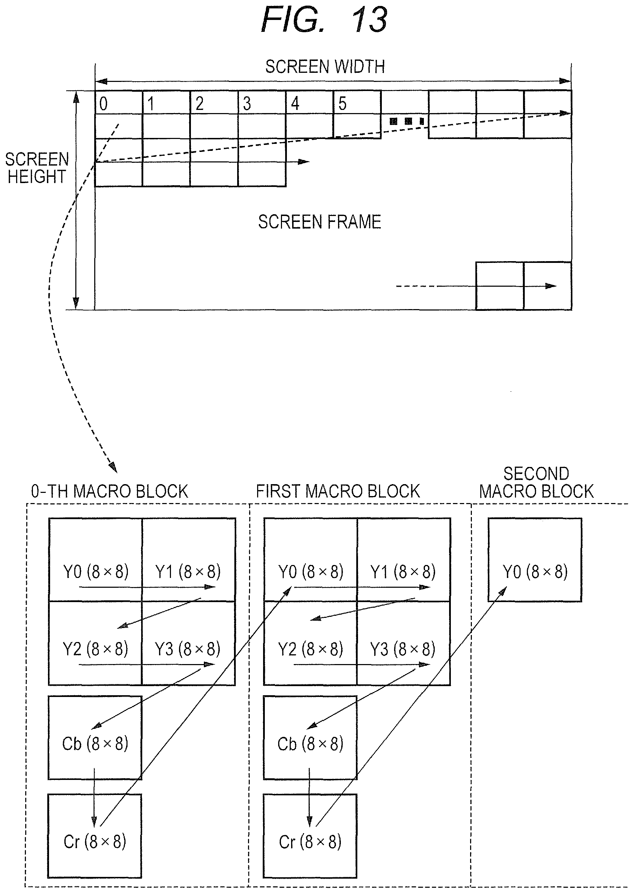

Referring to FIGS. 11 to 13, hash derivation in the video encoding circuit will be described below. FIG. 11 is a block diagram showing the configuration of the hash derivation circuit in FIG. 10. FIG. 12 is an explanatory drawing showing an operation of a hash computing unit in FIG. 10. FIG. 13 shows the order of data processing on a screen.

FIG. 11 is a block diagram showing the hash derivation circuit. The hash derivation circuit 33F includes a pixel data acquisition circuit 33F1 that acquires pixel data from the data buffer 339, a hash computing unit 33F2 for hash computation, and a hash storage circuit 33F3 that stores a derived hash value. Input screen pixel data is sequentially inputted from the data buffer 339 for an input screen, and then hash computation is performed. The hash storage circuit 33F3 includes, for example, a register.

The hash derivation circuit 33F performs processing for each macro block in synchronization with other circuit blocks of the video encoding circuit 33. The hash computing unit 33F2 uses MD5 as a hash function. As shown in FIG. 12, in the case of MD5, 64 calculations are sequentially performed based on 512-bit input data according to an algorithm. In other words, a loop is formed from i = 0 to 63 as shown in FIG. 12. In FIG. 12, reference characters A, B, C, and D denote 32-bit variables and a bit connection of A[i+1], B[i+1], C[i+1], and D[i+1] serves as 128-bit hash. From macro block data stored in the input screen data buffer, 512-bit data is sequentially supplied as an input. The example of FIG. 12 is premised on an 8-bit luminance macro block per pixel. Hash computation is performed on 8 by 8 pixels, that is, 64 pixels in total. Processing is sequentially performed on an upper-left luminance Y0, a luminance Y1, a luminance Y2, a luminance Y3, the color difference Cb, and the color difference Cr. At the end of processing on the color difference Cr, processing on the macro block is completed. In all macro blocks in the screen, the result of the previous macro block is used for the hash derivation of the subsequent macro block. Thus, the result is continuously used during the processing.

As indicated by an arrow in a screen frame illustrated in the upper part of FIG. 13, data processing for a screen is sequentially performed on a 0-th macro block, a first macro block, a second macro block, ... in the order of macro block processing. The processing is completed when a computation is performed to derive the last hash value at the completion of processing on the lower-right macro block of the screen. The last hash value is stored in the hash storage circuit 33F3 of FIG. 11 and is read from the CPU 35. The input order of data in FIG. 13 is merely an example.

As shown in FIG. 12, in a hash computation, previous hash values are sequentially updated. Thus, previous hash values may be stored and used for the subsequent loop, which corresponds to A[i+1], B[i+1], C[i+1], and D[i+1] in FIG. 12. A storage for storing previous hash in the hash computing unit 33F2 may be shared with the hash storage circuit 33F3 in FIG. 11.

According to the present example, the hash values of two screens are derived and stored and then are compared between the two screens, thereby detecting a failure like a stopped screen. The video encoding circuit arranged immediately before a data output is provided with the hash deviation circuit. This can detect a failure occurring somewhere in an overall camera input system.

### <Modifications>

Some representative modifications will be discussed below. In the explanation of the modifications, parts having the same configurations and functions as in the explanation of the foregoing example may be indicated by the same symbols as those of the foregoing example. In the explanation of the parts of the modifications, the explanation of the foregoing example may be optionally used as long as no technical contradiction arises. If a part of the configuration of the foregoing example is modified, other configurations of the example can be obviously combined with the modifications. Furthermore, a part of the example and at least a part of the modifications can be optionally used in a combined manner as long as no technical contradiction arises.

### (First Modification)

In the example of FIGS. 11, 12, and 13, the luminance Y, the color difference Cb, and the color difference Cr are all processed in a sequential manner on one screen. A hash computation features the need for serial arithmetic and the preclusion of parallel arithmetic, requiring a long execution time for serial processing of all data on one screen. If the execution time cannot be masked by an execution time for existing encoding, a problem may arise. Although 8-bit data per pixel was discussed, a 10-bit or 12-bit signal may be used per pixel. In this case, 10-bit processing is frequently expanded to 16-bit (2-byte) processing. This increases the data amount of serial processing in hash computation, causing a more serious problem in the execution time.

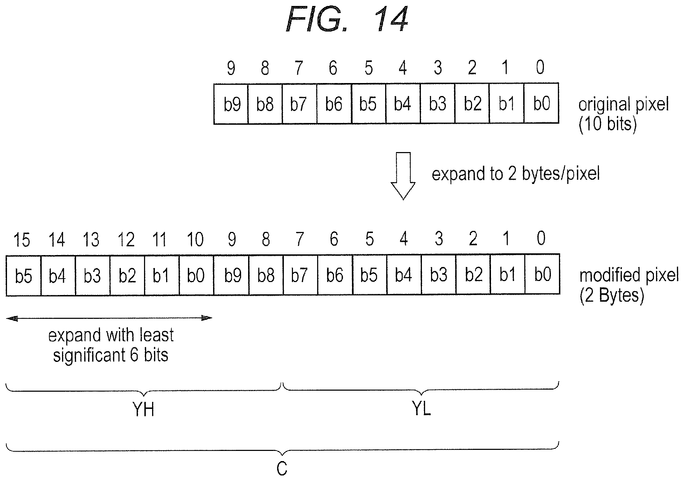

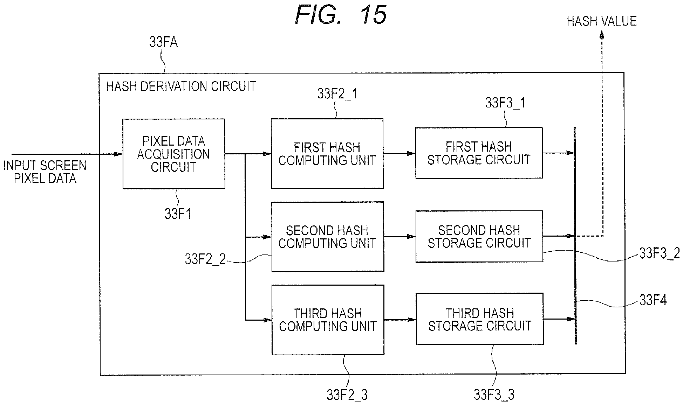

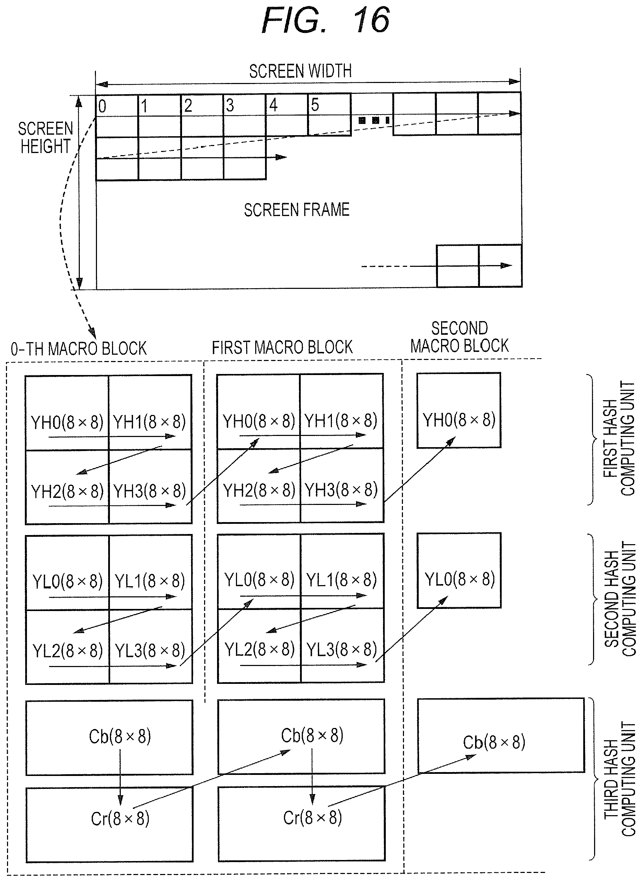

Referring to FIGS. 14 to 16, an example of parallel processing of 10-bit data segments per pixel will be discussed below. FIG. 14 shows an example of the expansion of a 10-bit signal to a 16-bit signal. FIG. 15 is a block diagram showing the hash derivation circuit according to the first modification. FIG. 16 shows an example of the processing order of 10-bit data per pixel.

First, the example of the expansion of a 10-bit signal to a 16-bit signal will be discussed below. Although 10 bits may be expanded with 6 bits of '0', the uniqueness of the resultant value of hash computation is likely to be lost. Thus, the least significant 6 bits of original 10 bits are combined as shown in FIG. 14. For a luminance, the most significant 8 bits of expanded 16 bits are denotes as YH while the least significant 8 bits are denoted as YL. For a color difference, the 16 bits are denoted as C. When a 12-bit signal is expanded to a 16-bit signal, the least significant 4 bits of original 12 bits are combined. Specifically, in the case of pixel data longer than 1 byte and shorter than 2 bytes, the least significant data of original data is allocated and combined with data segments shorter than 2 bytes so as to expand the pixel data to 2 bytes. This can reduce the probability that the uniqueness of the resultant value of hash computation will be lost.

As shown in FIG. 15, a hash derivation circuit 33FA includes three pairs: a first hash computing unit 33F2_1 and a first hash storage circuit 33F3_1, a second hash computing unit 33F2_2 and a second hash storage circuit 33F3_2, and a third hash computing unit 33F2_3 and a third hash storage circuit 33F3_3. One of the first hash storage circuit 33F3_1, the second hash storage circuit 33F3_2, and the hash storage circuit 33F3_3 is selected by a selector 33F4 and hash values are read by the CPU 35, parallelizing the hash derivation of the three pairs. Specifically, the first hash computing unit 33F2_1 processes YH data, the second hash computing unit 33F2_2 processes YL data, and the third hash computing unit 33F2_3 processes C data, thereby obtaining three hash values at the completion of one screen. A data amount processed by the hash computing units is substantially divided into three equal amounts. This can shorten an execution time so as to solve the problem.

As shown in FIG. 16, the luminance Y includes 16 bits divided into the most significant 8 bits and the least significant 8 bits, which are denoted as a YH block (luminance YH0, luminance YH1, luminance YH2, and luminance YH3) and a YL block (luminance YL0, luminance YL1, luminance YL2, and luminance YL3). The color difference Cb and the color difference Cr are each 16-bit data and thus are illustrated as blocks two times wider than that in FIG. 13. A data amount processed by the first hash computing unit 33F2_1, the second hash computing unit 33F2_2, and the third hash computing unit 33F2_3 is divided into three equal amounts. The first hash computing unit 33F2_1 sequentially processes the luminance YH0, the luminance YH1, the luminance YH2, and the luminance YH3 of the macro blocks, the second hash computing unit 33F2_2 sequentially processes the luminance YL0, the luminance YL1, the luminance YL2, and the luminance YL3 of the macro blocks, and the third hash computing unit 33F2_3 sequentially processes the color difference Cb and the color difference Cr of the macro blocks.

Three hash values obtained after processing of one screen are separately compared with those of the previous screen by the program on the CPU 35, allowing failure detection. Thus, a failure can be detected for each separate area so as to be located. The three hash values may be handled as one piece of data in an addition or an exclusive OR.

In the foregoing example, pixel data bits are divided into the most significant bits and the least significant bits. Pixels may be divided in the order of pixel data. For example, in the case where three consecutive pixels (3m), (3m+1), and (3m+2) can be simultaneously inputted, the pixel (3m), the pixel (3m+1), and the pixel (3m+2) may be processed in parallel by the first hash computing unit 33F2_1, the second hash computing unit 33F2_2, and the third hash computing unit 33F2_3, respectively (m = 0, 1, 2,...) . In this example, pixels are allocated to the three computing units. Pixels may be allocated to any number of computing units, e.g., at least two computing units. The expansion of the 10-bit signal to the 16-bit signal in FIG. 14 is not limited to the first modification and is applicable to the example and modifications that will be discussed later.

### (Second Modification)

In the example and the first modification, an image match is strictly confirmed and even a difference of 1 bit is identified as a failure. However, in some cases, confirmation is so strict that a failure is likely to escape detection. Specifically, even if a screen is stopped by a failure, some noise may change the least significant bits of a pixel such that "no failure" is determined. To solve this problem, the least significant bits of pixel data are rounded before hash computation.

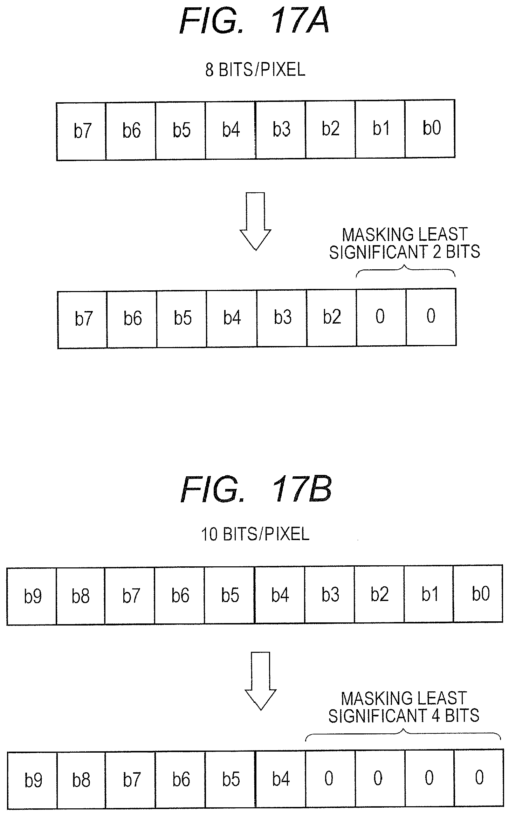

Referring to FIGS. 17A and 17B, a method of providing ambiguity by rounding pixel data will be described below. FIGS. 17A and 17B show an example of the technique of providing ambiguity by rounding pixel data. FIG. 17A shows 8 bits/pixel and FIG. 17B shows 10 bits/pixel. For example, as shown in FIG. 17A, when the least significant 2 bits of 8 bits/pixel are masked with 0, the sets of 0 to 3, 4 to 7, ... , and 252 to 255 are deemed to have the same values. Thus, the same hash is likely to be obtained. In other words, detection becomes so ambiguous that a failure is less likely to be missed by noise. This control preferably corresponds to a bit depth per pixel. For example, as shown in FIG. 17B, when the least significant 2 bits of 8 bits are masked, the least significant 4 bits of 10 bits are masked.

The mask of the least significant bits is merely one example. A technique of providing ambiguity for pixel values may be other techniques such as a low-pass filter. The masking of the least significant bits in FIGS. 17A and 17B is not limited to the example and the first modification and is also applicable to the following modifications.

### (Third Modification)

In the example and the first and second modifications, a failure is determined when a partial or full match of data is found on two consecutive screens. In some applications, immediate determination of a failure on two screens may be regarded as being improper. To solve this problem, hash values may be stored on at least three screens and a failure is determined on at least three screens.

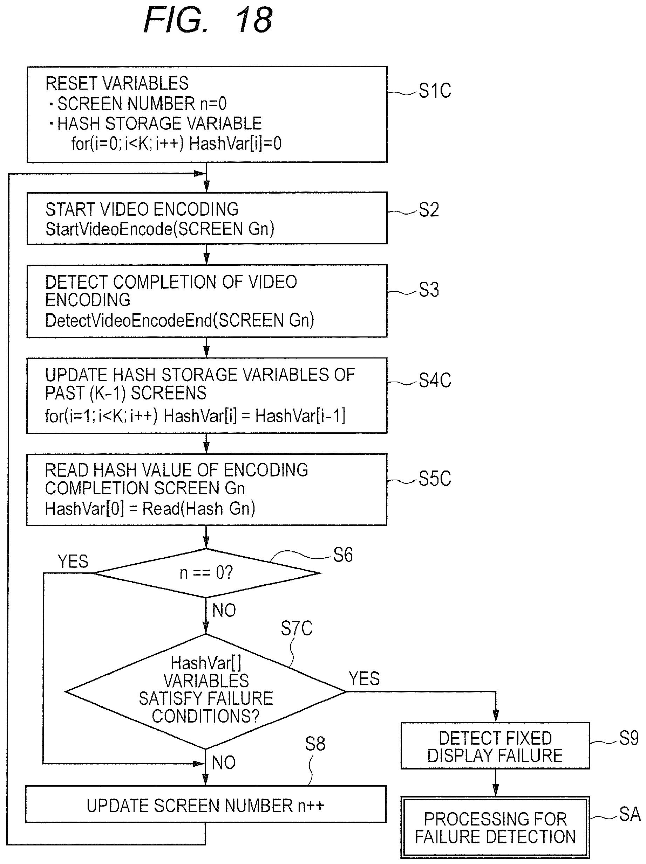

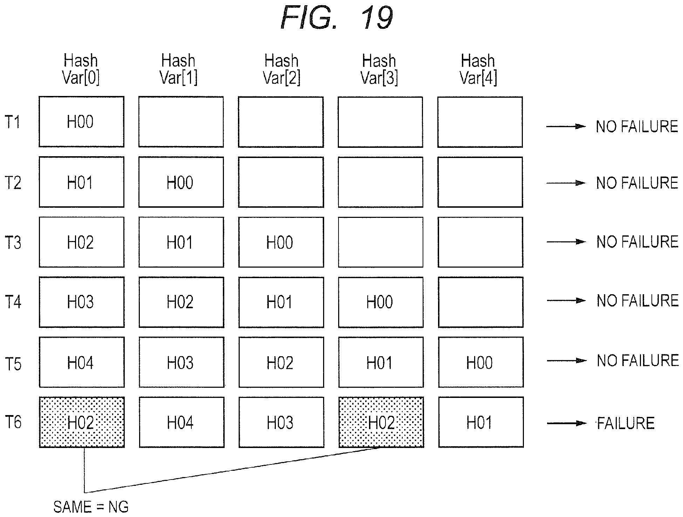

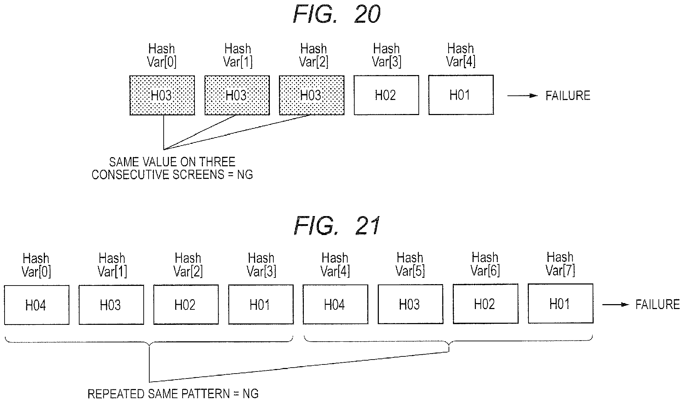

Referring to FIGS. 18 to 21, an example of determination of a failure on at least three screens will be described below. FIG. 18 is a flowchart showing failure determination on K screens. FIG. 19 is an explanatory drawing showing an example of a failure determined when the past five screens include identical screens. FIG. 20 is an explanatory drawing showing an example of a failure determined when three consecutive past screens are identical to one another. FIG. 21 is an explanatory drawing showing an example of a failure determined when the same combination of screens repeatedly appears.

As shown in FIG. 18, a variable for storing a hash value is expressed as HashVar [i] (i = 0, 1, ... , K-1). Each time a picture is completed, a hash value is extracted from the hash storage circuit 33F3 of the video encoding circuit 33 and is stored in HashVar [0]. Before that, the HashVar [ ] variable is caused to perform a first-in first-out (FIFO) operation and store pas K pash values. If the HashVar[ ] variable satisfies predetermined failure conditions, a failure is detected. The steps will be discussed below.
Step S1C; The CPU 35 resets variables as follows:
   Screen number: n = 0
   Hash storage variable: for(i = 0; i < K; i++) HashVar[i] = 0
Step S2: The CPU 35 provides an instruction to the control circuit 331, causing the video encoding circuit 33 to start video encoding (StartVideoEncode (screen Gn)).
Step S3: The CPU 35 detects the completion of video encoding from the video encoding circuit 33 (DetectVideoEncodeEnd (screen Gn)).
Step S4C: The CPU 35 updates hash storage variables for past (K - 1) screens. for(i = 1; i < K; i++) HashVar[i] = HashVar[i-1]
Step S5C: The CPU 35 reads the hash value of the encoding completion screen Gn from the video encoding circuit 33 (HashVar[0] = Read(Hash Gn)). Step S6: The CPU 35 decides whether the current screen is the first screen or not (n==0?). In the case of NO, the process advances to step S7. In the case of YES, the process advances to step S8.
Step S7C: The CPU 35 decides whether HashVar [ ] variables satisfy the failure conditions. In the case of NO (do not satisfy), the process advances to step S8. In the case of YES (satisfy), the process advances to step S9. Step S8: The CPU 35 updates the screen number (n++) and then the process returns to step S2.
Step S9: The CPU 35 detects a fixed display failure.
Step SA: The CPU 35 performs the processing for failure detection.

Various failure determination conditions may be used. FIG. 19 is an explanatory drawing showing an example of a failure determined when past five screens include identical screens. FIG. 20 is an explanatory drawing showing an example of a failure determined when three consecutive screens in the past are identical to one another. FIG. 21 is an explanatory drawing showing an example of a failure determined when the same combination of screens repeatedly appears.

For example, it is assumed that multiple screen buffers provided in the preceding stage of the video encoding circuit 33 are partially faulty such that the same screen is periodically inputted. In this case, a failure is determined when the current hash value matches any one of past four hash values. FIG. 19 shows an example of K = 5 with time-series failure determination conditions. HashVar[0] stores the hash value of the current picture and HashVar[1] to HashVar[4] stores the hash values of past four screens. FIG. 19 shows data transfer in the hash storages of six screens at a first time (T1) to a sixth time (T6). At the first time (T1), H00 of the first hash value is stored in HashVar[0] . At the second time (T2), H00 of HashVar[0] moves to HashVar[1] and H01 of the subsequent hash value is stored in HashVar[0]. In this way, HashVar[0] to HashVar[4] are updated by a FIFO operation. A failure is determined depending on whether or not the value in HashVar[0] is equal to those in HashVar[1] to HashVar[4]. Until the fifth time (T5), the value in HashVar[0] is different from those in HashVar[1] to HashVar[4] and thus it is decided that no failure is found. At the sixth time (T6), a hash value H02 is stored in HashVar[0] . The hash value is equal to that in HashVar[3] and thus it is decided that a failure is found.

In another example of the failure determination conditions, it is decided that a failure is found when three consecutive screens have equal hash values, for example, a hash value H03 is stored in HashVar[0] to HashVar[2] as shown in FIG. 20. In the failure determination conditions, only PrevHashVar and CurrHashVar may be used in a flow without the need for HashVar[ ]. A counter is provided to count the number of consecutive screens having equal hash values and compare the number of consecutive screens with a predetermined threshold value. In the case of applications for ADAS and drones that strongly require readiness and fastness, a failure is preferably determined with a small number of screens. For security cameras typically having a small number of screen changes, a failure is preferably determined for an extended period.

As shown in FIG. 21, when hash values H04, H03, H02, and H01 are stored in HashVar[0] to HashVar[3], respectively, and hash values H04, H03, H02, and H01 are stored in HashVar[4] to HashVar[7], respectively, the same pattern may appear like a loop. Such a faulty pattern may be detected as a failure (included in the failure determination conditions).

### (Fourth Modification)

In the example and the first to third modifications, the hash derivation circuit 33F is provided in the video encoding circuit 33 and a failure is determined by the control program. A failure may be determined by a circuit in the hash derivation circuit.

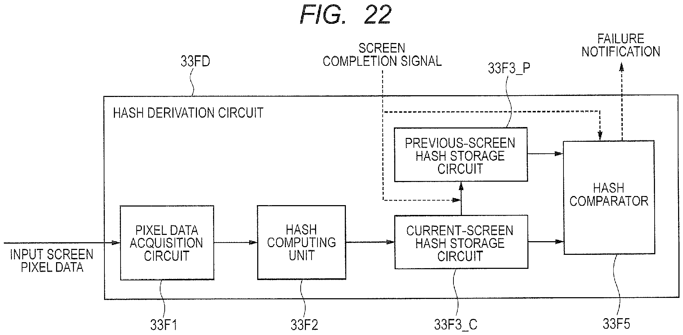

Referring to FIG. 22, an example of the provision of a failure detection circuit in a hash derivation circuit. FIG. 22 is a block diagram showing the hash derivation circuit according to a fourth modification. A hash derivation circuit 33FD according to the fourth modification includes a pixel data acquisition circuit 33F1, a hash computing unit 33F2, a current-screen hash storage circuit 33F3_C, a previous-screen hash storage circuit 33F3_P, and a hash comparator 33F5. A screen completion signal is inputted from the control circuit 331 and hash values are compared with each other at this point. A failure notification is returned as a result. The hash value of a current screen is stored in the current-screen hash storage circuit 33F3_C, the hash value of the current-screen hash storage circuit 33F3_C is moved to the previous-screen hash storage circuit 33F3_P by the screen completion signal, and the hash value of the previous screen is stored in the previous-screen hash storage circuit 33F3_P. Failure detection by hardware enables an autonomous device configuration that detects a failure and performs processing for a failure without using software.

In the example and the first to fourth modifications, the video encoding circuit in the image processor includes a circuit that derives a hash value unique to an input screen. The hash values of multiple screens can be compared with each other by a control program or the circuit that derives the hash values. Thus, a change between the screens can be easily confirmed so as to easily determine a fixed display failure when a screen change is detected. Moreover, failures other than a failure of a uniform color can be easily detected. Hash values are derived and compared in separate areas in a screen, thereby specifying a faulty location.

### (Fifth Modification)

In the example and the first to fourth modifications, a failure is detected for each screen. A screen may be divided into areas and a failure may be detected for each of the areas by calculating a hash value for each of the areas.

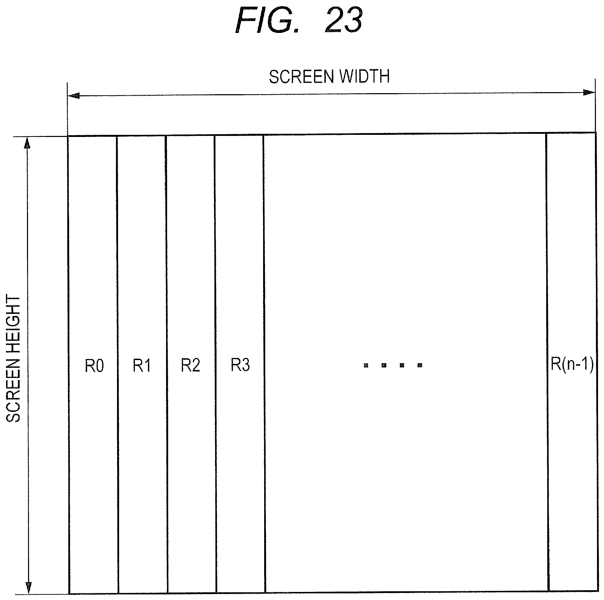

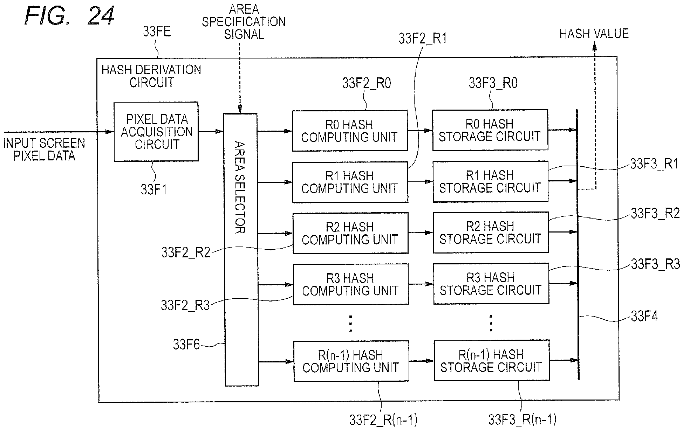

FIGS. 23 and 24 show an example of failure detection for each of the separate areas of a screen. FIG. 23 shows an example of a screen vertically divided into n areas. FIG. 24 is a block diagram showing a hash derivation circuit according to a fifth modification.

As shown in FIG. 23, the screen is vertically divided into n areas R0, R1, R3, ... R(n-1).

As shown in FIG. 24, a hash derivation circuit 33FE includes a pixel data acquisition circuit 33F1, an area selector 33F6, an R0 hash computing unit 33F2_R0 to an R (n-1) hash computing unit 33F2_R(n-1) , an R0 hash storage circuit 33F3 to an R (n-1) hash storage circuit 33F3_R(n-1), and a selector 33F4.

The R0 hash computing unit 33F2_R0 to the R(n-1) hash computing unit 33F2_R(n-1) compute the hash values of the areas R0 to R(n-1), respectively. The R0 hash storage circuit 33F3_R0 to the R(n-1) hash storage circuit 33F3_R (n-1) store the hash values of the areas R0 to R(n-1), respectively. In response to an area selection signal from the control circuit 331, the area selector 33F6 selects one of the R0 hash computing unit 33F2_R0 to the R(n-1) hash computing unit 33F2_R(n-1). For example, when the R0 hash computing unit 33F2_R0 is selected by the area selector 33F6, a hash value is derived from a pixel belonging to the area R0 and then is written in the R0 hash storage circuit 33F3_R0 . The same processing is performed on all the n areas. After the completion of one screen, all of the R0 hash storage circuit 33F3_R0 to the R(n-1) hash storage circuit 33F3_R(n-1) are activated. In this dividing method, for example, if an area is shaped like a column as wide as a pixel, a failure only in a column of a CMOS sensor can be detected. The CMOS sensor is an example of an image pickup device of the camera device 2. The screen may be divided in various ways according to a failure mode of an input device, e.g., a camera. For example, the screen can be divided in rows or divided into rectangles.

In addition, the data buffer 339 for an input screen may vary in capacity and storage format depending on the processing order (scanning order) of data on a screen and a combination of separate shapes. Moreover, an additional buffer may be necessary.

According to the fifth modification, a failure can be minutely detected in each of the separate areas. This can easily identify the cause and location of a failure. Moreover, a faulty location can be masked with a small range. Detection is allowed specifically for a failure mode for a sensor, for example, a failure in a column of a CMOS sensor.

### (Sixth Modification)

As described above, the hash storage circuit that stores a final result and the storage circuit for updating in the hash storage may be a common storage circuit. In this case, the R0 hash computing unit to R(n-1) hash computing unit and the hash computing units for the respective areas can be shared.

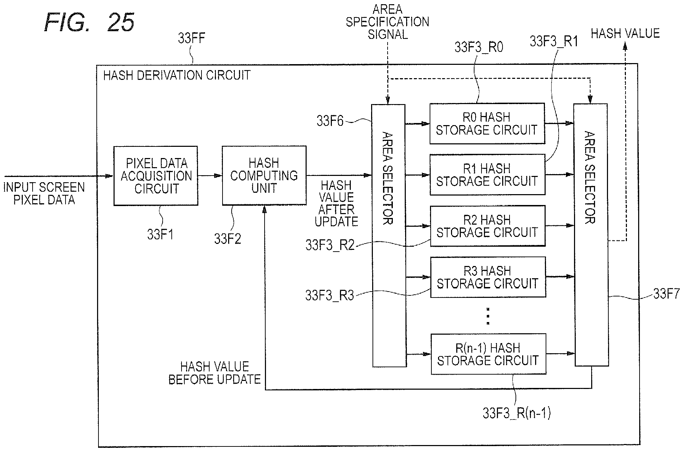

FIG. 25 is a block diagram showing a hash derivation circuit according to a sixth modification.

A hash derivation circuit 33FF according to the sixth modification includes a pixel data acquisition circuit 33F1, a hash computing unit 33F2, an area selector 33F6, an R0 hash storage circuit 33F3_R0 to an R (n-1) hash storage circuit 33F3_R(n-1), and an area selector 33F7.

The R0 hash storage circuit 33F3_R0 to the R (n-1) hash storage circuit 33F3_R(n-1) store the hash values of areas R0 to R(n-1), respectively. The area selector 33F6 selects one of the R0 hash storage circuit 33F3_R0 to the R (n-1) hash storage circuit 33F3_R(n-1) in response to an area selection signal supplied from the control circuit 331. In the hash computing unit 33F2, for example, a hash value is derived from a pixel belonging to the area R0 and then is written in the R0 hash storage circuit 33F3_R0 selected by the area selector 33F6. Moreover, for example, while the hash value of the pixel belonging to the area R0 is derived, the hash computing unit 33F2 reads a hash value from the R0 hash storage circuit 33F3_R0 before an update, computes a new hash value, updates the hash value to the newly computed hash value, and stores the updated hash value in the R0 hash storage circuit 33F3_R0.

### (Seventh Modification)

In the example and the first to sixth modifications, a failure is determined using hash values. A failure may be determined without using hash values.

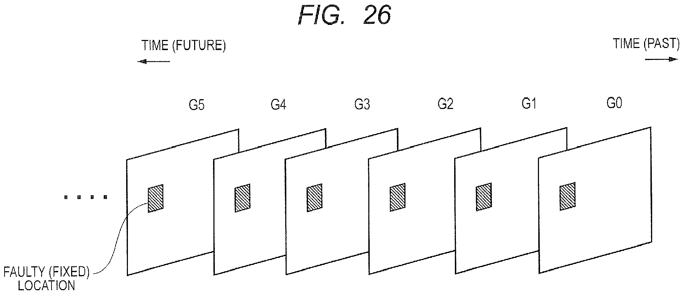

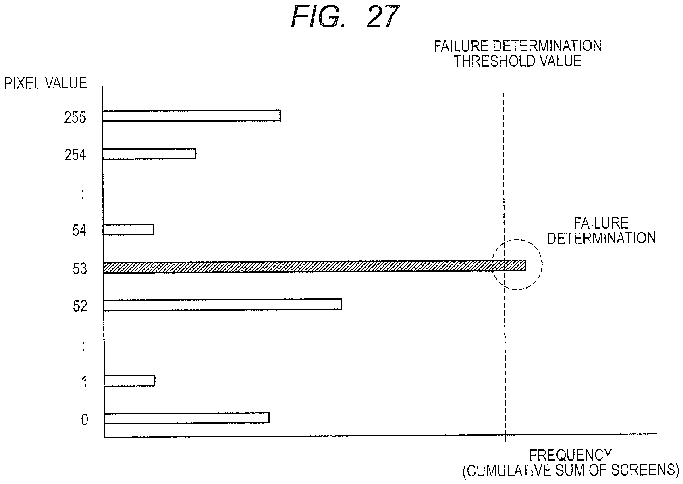

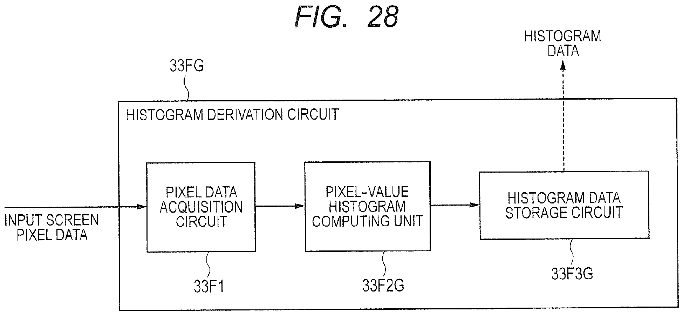

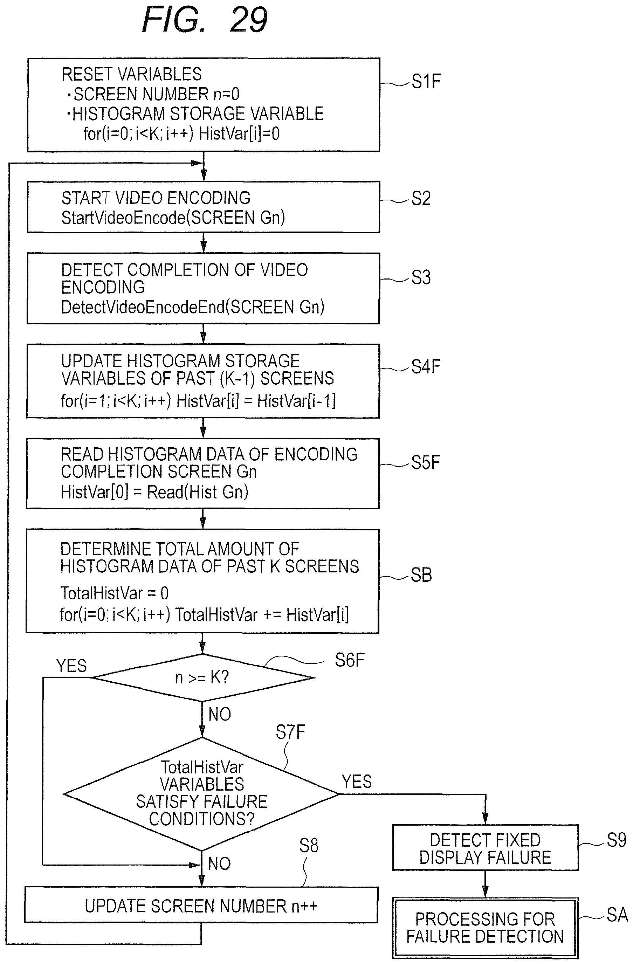

Referring to FIGS. 26 to 29, an example of failure determination using a pixel value histogram instead of hash values will be discussed below. FIG. 26 shows a failure that is a pixel value fixed at a location of a screen. FIG. 27 is a conceptual diagram showing failure determination according to a pixel value histogram. FIG. 28 is a block diagram showing a histogram derivation circuit according to a seventh modification. FIG. 29 is a flowchart showing an operation flow of a control program.

As shown in FIG. 26, it is assumed that a faulty location in the screen is fixed at a pixel value. The screen constitutes an image sequence where parts other than the faulty location change on screens G0 to G5.

As shown in FIG. 27, a pixel value histogram of the screens, that is, the frequency of use of pixel values is obtained to sum the frequencies of the screens. It is assumed that the faulty location indicates only the fixed pixel value and thus only the frequency of the pixel value increases. For example, in the case of a pixel value fixed at 53, the sum of the frequencies of the screens increases only the frequency of the pixel value of 53. The sum of the frequencies is compared with a predetermined failure determination threshold value to determine a failure.

The number of screens for the cumulative sum of the histogram and the failure determination threshold value can be determined by any method. The histogram may be determined for each range of pixel values (e.g., 50 to 54) instead of each pixel value.

In the present modification, the histogram derivation circuit is provided instead of the hash derivation circuit in the same configuration as FIGS. 2, 4, and 10. As shown in FIG. 28, a histogram derivation circuit 33FG includes a pixel data acquisition circuit 33F1, a pixel-value histogram computing unit 33F2G, and a histogram data storage circuit 33F3G. Based on pixel data obtained by the pixel data acquisition circuit 33F1, the pixel-value histogram computing unit 33F2G derives the histogram for pixel values as shown in FIG. 27. The results of pictures are stored in the histogram data storage circuit 33F3G. A histogram computation is disclosed in, for example, Japanese Unexamined Patent Application Publication No. 2008-300980 (US Unexamined Patent Application Publication No. 2008/0298685).

FIG. 29 shows an operation flow of the control program. The steps of the operation flow will be discussed below.
Step S1F: The CPU 35 resets variables as follows:
   Screen number: n = 0
   Histogram storage variable: for(i = 0; i < K; i++) HashVar[i] = 0
Step S2: The CPU 35 provides an instruction to the control circuit 331, causing the video encoding circuit 33 to start video encoding (StartVideoEncode (screen Gn)).
Step S3: The CPU 35 detects the completion of video encoding from the video encoding circuit 33 (DetectVideoEncodeEnd (screen Gn)).
Step S4F: The CPU 35 updates histogram storage variables for past (K - 1) screens.
   for(i = 1; i < K; i++) HistVar[i] = HistVar[i-1]
Step S5F: The CPU 35 reads the histogram data of the encoding completion screen Gn from the video encoding circuit 33 (HistVar[0] = Read (Hist Gn)). Step SB: The CPU 35 sums the histogram data of past K screens. TotalHistVar = 0
   for(i = 0; i < K; i++) TotalHistVar += HistVar[i]
Step S6F: The CPU 35 decides whether a screen number is at least K or not (n >= K?).

In the case of NO, the process advances to step S7F. In the case of YES, the process advances to step S8.
Step S7F: The CPU 35 decides whether TotalHistVar variables satisfy failure conditions. In the case of NO (do not satisfy), the process advances to step S8. In the case of YES (satisfy), the process advances to step S9.
Step S8: The CPU 35 updates the screen number (n++) and then the process returns to step S2.
Step S9: The CPU 35 detects a fixed display failure.
Step SA: The CPU 35 performs processing for failure detection.

In the case of a hash value for each screen according to the example, partially fixed display cannot be detected because even a partial change varies hash values. In the present example, a failure of partially fixed display can be detected.

The seventh modification is combined with division of a screen according to the fifth or sixth modification, thereby identifying the location of a failure in a screen. For example, failure determination per pixel enables detection of a dot failure. The seventh modification can be also combined with division of data for each luminance and each color difference according to the first modification.

The invention made by the present inventors has been specifically described according to the embodiment, the example, and the modifications. Obviously, the present invention is not limited to the embodiment, the example, and the modifications and can be changed in various ways.

For example, in the example and the modifications, hash values on the input screen are used to detect a failure. Instead of hash values, pixel data on an input screen may be used to detect a failure.

In the example and the modifications, the hash derivation circuit or the histogram derivation circuit is applied to, but not exclusively, the video encoding circuit in the image processor. For example, the hash derivation circuit or the histogram derivation circuit may be provided for at least one of the camera signal processing circuit, the image recognition circuit, the graphics processing circuit, and the display processing circuit of FIG. 2. This can detect a failure in each circuit and identify the location of a failure.

In the example, the ADAS system was described. The present invention is applied to a device or system that receives camera images and a device or system that receives images other than camera images. For example, the present invention is applicable to a robot or drone that autonomously moves or is remotely operated in response to a camera input, an onboard camera, a drive recorder, a network camera, and a security camera.

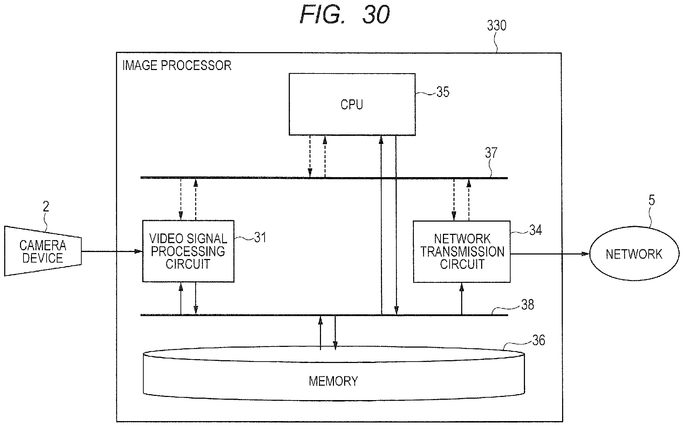

In the example and the modifications, the video encoding circuit is configured with special hardware. The video encoding circuit may be partially or entirely configured with software executed by a CPU. For example, for screen prediction, hash derivation, screen encoding, local screen decoding, entropy encoding, and so on, programs stored in memory may be executed by a CPU. In this case, the programs are stored in a storage device, e.g., the memory 36. If processing is fully performed by the CPU, as shown in FIG. 30, an image processor 330 includes, for example, the CPU (arithmetic circuit) 35 and the memory (storage circuit) 36. The programs are stored in the memory 36. Processing by software eliminates the need for special hardware, thereby reducing a chip area.

### <Supplement>

An aspect of an embodiment will be described below.
(1) An image processor includes: a histogram derivation circuit having at least computing unit that computes the histogram data of pixel values on input screens, and at least one storage circuit that stores the histogram data; and a failure detection circuit in which whether the screens have changed or stopped is decided by accumulating the histogram data between screens, and a failure is detected when the screens are stopped.
(2) In the image processor of (1),
   the failure detection circuit includes a CPU that reads the histogram data of the storage circuit and accumulates the data between the screens so as to decide whether the screens have changed or stopped, and detects a failure when the screens are stopped.
(3) The image processor of (2) further includes:
   a video encoding circuit that compresses video,
   the histogram derivation circuit being included in the video encoding circuit so as to sequentially calculate the histogram data of the input screens in the order of processing blocks of video encoding.
(4) In the image processor of (3),
   the histogram derivation circuit includes the computing units and the storage circuits,
   the histogram derivation circuit divides the pixels on the input screen according to a pit string or a luminance/color difference, calculates different histogram data in parallel for each separate element by means of the computing units, and stores segments of the histogram data in the respective storage circuits, and
   the CPU reads the histogram data from the storage circuits, accumulates the data for each element, and detects a failure.
(5) In the image processor of (3),
   the histogram derivation circuit further includes an area selector, the computing units, and the storage circuits,
   the area selector inputs the input screen divided into a plurality of areas, to one of the computing units based on an area selection signal,
   the computing units calculate different segments of histogram data for the respective separate areas,
   the storage circuits store the respective segments of the histogram data, and
   the CPU reads the histogram data of the storage circuits, accumulates the data for each of the areas between the screens, and detects a failure.
(6) In the image processor of (3),
   the histogram derivation circuit includes an area selector and the storage circuits,
   the histogram derivation circuit divides the input screen into a plurality of areas and calculates different segments of histogram data for the respective separate areas,
   the area selector stores the segments of the histogram data in the respective storage circuits based on an area selection signal, and
   the CPU reads the histogram data of the storage circuits, accumulates the data for each of the areas between the screens, and detects a failure.
(7) The image processor of (3) further includes:
   a video signal processing circuit that processes a video signal from a camera device,
   the input screen being an image processed by the video signal processing circuit.
(8) In the image processor of (3),
   the video encoding circuit includes a screen prediction circuit, a screen encoding circuit, a local screen decoding circuit, and an entropy encoding circuit, and
   the input screen is a screen that is outputted from the screen prediction circuit and is inputted to the screen encoding circuit.

## Claims

1. An image processor comprising:
a hash derivation circuit having at least one computing unit that calculates hash values on screens of inputted video, and at least one storage circuit that stores the hash values; and
a failure detection circuit in which whether the screens have changed or not is decided by comparing the hash values between the screens of inputted video, and a failure is detected when the screens have not changed.

2. The image processor according to claim 1,
wherein the failure detection circuit includes a CPU that reads the hash values of the storage circuit and compares the hash values between the screens so as to decide whether the screens have changed or not, the CPU detecting a failure when the screens have not changed.

3. The image processor according to claim 1 or 2, further comprising a video encoding circuit that compresses video,
the hash derivation circuit being included in the video encoding circuit so as to sequentially calculate the hash values of input screens in an order of processing blocks of video encoding.

4. The image processor according to claim 1, 2 or 3,
wherein the hash derivation circuit includes:
the computing units; and
the storage circuits,
wherein the hash derivation circuit divides pixels on the input screen according to a pit string or a luminance/color difference, calculates different hash values in parallel for each separate element by means of the computing units, and stores the hash values in the respective storage circuits, and
wherein the CPU reads the hash values from the storage circuits, compares the read hash values between the screens, and detects a failure.

5. The image processor according to claim 1, 2 or 3,
wherein the hash derivation circuit further includes:
an area selector;
the computing units; and
the storage circuits,
wherein the area selector inputs the input screen divided into a plurality of areas, to one of the computing units based on an area selection signal,
wherein the computing units calculate different hash values for the respective separate areas,
wherein the storage circuits store the respective hash values, and
wherein the CPU reads the hash values of the storage circuits, compares the read hash values between the screens, and detects a failure.

6. The image processor according to claim 1, 2 or 3,
wherein the hash derivation circuit further includes:
an area selector; and
the storage circuits,
wherein the hash derivation circuit divides the input screen into a plurality of areas and calculates different hash values for the respective separate areas by means of the computing units,
wherein the area selector stores the hash values in the respective storage circuits based on an area selection signal, and
wherein the CPU reads the hash values of the storage circuits, compares the read hash values between the screens, and detects a failure.

7. The image processor according to any of claims 1 to 6,
wherein if pixel data on the input screen is longer than 1 byte and is shorter than 2 bytes, least significant data of original data is combined with data segments shorter than 2 bytes so as to expand the pixel data to 2 bytes.

8. The image processor according to any of claims 1 to 6,
wherein the hash derivation circuit masks least significant bits of pixel data on the input screen before the computing units calculate the hash values.

9. The image processor according to any of claims 2 to 8,
wherein the CPU detects a failure when the screens consecutively have equal hash values.

10. The image processor according to any of claims 2 to 8,
wherein the CPU detects a failure when the screens consecutively have equal hash values at least a predetermined number of times.

11. The image processor according to any of claims 2 to 8,
wherein the CPU stores hash values of a predetermined number of past screens and detects a failure when the hash value of the current screen is equal to the hash value of one of the predetermined number of past screens.

12. The image processor according to any of claims 3 to 11, further comprising a video signal processing circuit that processes a video signal from a camera device,
wherein the input screen is an image processed by the video signal processing circuit.

13. The image processor according to any of claims 3 to 12,
wherein the video encoding circuit further includes:
a screen prediction circuit;
a screen encoding circuit;
a local screen decoding circuit; and
an entropy encoding circuit, and
wherein the input screen is a screen that is outputted from the screen prediction circuit and is inputted to the screen encoding circuit.

14. The image processor according to any of claims 1 to 14,
wherein the storage circuit includes:
a first storage circuit that stores the hash value of the current screen; and
a second storage circuit that stores the hash value of the previous screen,
wherein the hash derivation circuit further includes a comparator that compares the hash value stored in the first storage circuit and the hash value stored in the second storage circuit, and
wherein the failure detection circuit is the comparator that detects a failure when detecting a match.

15. A semiconductor device comprising:
a video encoding circuit including a screen encoding circuit that derives a coefficient string with a compressed data amount based on an input screen and a predicted screen, and a hash derivation circuit that calculates a hash value of the input screen; and
a CPU that controls the video encoding circuit,
the hash derivation circuit including:
a first computing unit that calculates a hash value of a first pixel;
a second computing unit that calculates a hash value of a second pixel;
a third computing unit that calculates a hash value of a third pixel;
a first storage circuit that stores the hash value calculated by the first computing unit;
a second storage circuit that stores the hash value calculated by the second computing unit; and
a third storage circuit that stores the hash value calculated by the third computing unit,
wherein the hash derivation circuit divides pixels of the input screen according to a first luminance, a second luminance, and a color difference, calculates three hash values in parallel for each separate element by means of the first computing unit, the second computing unit, and the third computing unit, and stores the three hash values in the first storage circuit, the second storage circuit, and the third storage circuit, respectively, and
wherein the CPU reads the three hash values of the first computing unit, the second computing unit, and the third computing unit, compares the read hash values between the screens, and detects a failure.

16. The semiconductor device according to claim 15,
wherein the video encoding circuit further includes:
a screen prediction circuit that makes an intra-screen prediction or an inter-screen prediction from the input screen and a reference screen;
a local screen decoding circuit that performs inverse transformation of the screen encoding circuit and decodes the screen; and
an entropy encoding circuit that generates an encoded bit string from the coefficient string outputted from the screen encoding circuit.

17. The semiconductor device according to claim 15 or 16,
wherein the input screen is divided into a plurality of macro blocks, and the video encoding circuit performs encoding and hash derivation for each of the macro blocks.

18. The semiconductor device according to claim 15, 16 or 17,
wherein in the case of 10-bit pixel data on the input screen, least significant 6 bits of the data are combined with most significant bits of the data, and in the case of 12-bit pixel data, least significant 4-bit data is combined with most significant bits of the data so as to expand the data to 16 bits.

19. The semiconductor device according to any of claims 15 to 18, further comprising a video signal processing circuit that processes a video signal from a camera device;
a network transmission circuit; and
a memory that stores a program for causing the CPU to control the video encoding circuit,
wherein data outputted from the video signal processing circuit is inputted to the video encoding circuit through the memory, and
the data outputted from the video encoding circuit is inputted to the network transmission circuit through the memory.

20. An image processor comprising a computing circuit and a storage circuit,
wherein the computing circuit calculates hash values on a screen of inputted video, stores the hash values in the storage circuit, and compares the hash values between screens of the inputted video so as to decide whether the screens have changed or not, the computing circuit detecting a failure when the screens have not changed.
